# FASCICULE DE BREVET EUROPEEN

(11) **EP 1 484 226 B1**
(45) Date de publication et mention de la délivrance du brevet: **01.08.2007**
(21) Numéro de dépôt: 04291307.9
(22) Date de dépôt: 24.05.2004
(51) Int. Cl.: B60T 13/74, F16D 55/36

(54) **Procédé de commande d'un frein électromécanique pour aéronef**
Methode zum Betreiben einer elektromagnetischen Bremse für ein Flugzeug
Method of controlling an electromagnetic brake for an airplane

(30) Priorité: 06.06.2003 FR 0306852
(43) Date de publication de la demande: 08.12.2004
(73) Titulaire: MESSIER-BUGATTI, 78140 Velizy Villacoublay (FR)
(72) Inventeur: Chico, Philippe, 92500 Rueil-Malmaison (FR); Girod, Pierre, 75017 Paris (FR)
(74) Mandataire: Jaunez, Xavier

(56) Documents cités:
- DE-A- 19 910 048
- US-A1- 2001 023 798
- US-B1- 6 471 015

## Description

L'invention concerne un procédé de commande d'un frein électromécanique pour aéronef.

### ARRIERE-PLAN DE L'INVENTION

Les freins pour aéronefs comprennent une pile de disques dont une partie (rotors) est liée en rotation à la roue et une autre partie (stators) est immobile en rotation, un organe de pressage étant disposé en regard de la pile de disques pour presser celle-ci et ainsi dissiper de l'énergie par frottement entre les disques tournants et les disques immobiles.

L'organe de pressage comprend, dans le cas d'un frein hydraulique, une couronne s'étendant en regard de la pile de disques et comportant des pistons montés sur la couronne pour presser la pile de disques sous l'action d'un fluide hydraulique sous pression.

Lorsque le frein n'est pas actif, les pistons sont dans une position d'attente à proximité des disques, avec un jeu de fonctionnement de l'ordre de quelques millimètres, qui correspond à la course proprement dite des pistons. L'usure des disques provoquant une diminution de l'épaisseur de la pile de disques pouvant aller jusqu'à plusieurs dizaines de millimètres, il est généralement prévu un mécanisme de rattrapage d'usure, composé d'éléments déformables ou à friction, permettant de maintenir les pistons à proximité de la pile de disques quel que soit le degré d'usure des disques.

Le remplacement des disques usés par des disques neufs nécessite donc de faire revenir les pistons à une position permettant le montage d'une pile de disques neufs en réinitialisant le mécanisme de rattrapage d'usure.

Pour cela, il est connu, pour certains types de freins, de réinitialiser chacun des mécanismes de rattrapage d'usure à l'aide d'une presse. Il faut donc démonter la couronne et l'installer dans un outillage spécifique.

Dans d'autres types de freins, il faut démonter les éléments du mécanisme de rattrapage d'usure afin de les remplacer par des mécanismes neufs.

Dans les deux cas, la réinitialisation du mécanisme de rattrapage d'usure nécessite de démonter le frein et de séparer la couronne de la structure de frein. Ces opérations sont longues et coûteuses.

Il s'avère donc impossible, dans le domaine des freins hydrauliques, de faire reculer les pistons de façon simple.

Les nouveaux freins envisagés dans le domaine aéronautique sont de plus en plus souvent de type électromécanique dans lequel le ou les pistons sont remplacés par un ou des actionneurs électromécaniques comprenant un poussoir monté à déplacement en regard des disques, le poussoir étant actionné à l'aide d'un moteur électrique via un convertisseur de rotation du moteur en un déplacement du poussoir.

Le document US-A-6 471 015 décrit un système de mesure d'usure des disques configuré pour estimer une épaisseur des disques et en déduire une position d'attente de chaque poussoir qui est éloignée des disques d'un jeu prédéterminé. Un recul des poussoirs est prévu conformément aux techniques classiques, de la position de contact à la position d'attente.

Au titre de l'arrière-plan technologique, on peut également citer le US-A-2001/0023798 qui enseigne le retrait d'un poussoir d'un frein à disque de véhicule automobile à architecture en étrier pour changer les plaquettes de frein et DE 19910048 qui décrit un procédé de contrôle du mouvement d'un actionneur électromécanique d'un frein de véhicule.

La course totale de déplacement du poussoir des freins électromécaniques actuellement envisagés est prévue assez longue pour permettre le rattrapage d'usure par simple rotation du moteur électrique dans un sens tendant à rapprocher le poussoir de la pile de disques, de sorte que le poussoir est maintenu à proximité de la pile de disques sans l'aide de mécanisme spécifique de rattrapage d'usure.

Une application directe, pour les freins électromécaniques, des procédures de réinitialisation connues dans le domaine des freins hydrauliques ne donne pas satisfaction. En effet, une réinitialisation à la presse est dans la plupart des cas impossible, car le convertisseur n'est pas réversible, tandis qu'une réinitialisation par démontage se révèle délicate, les actionneurs étant des éléments techniques bien plus complexes que des pistons hydrauliques.

### OBJET DE L'INVENTION

L'invention a pour objet de proposer un procédé de commande des freins électromécaniques qui exploite les possibilités offertes par une telle technologie pour offrir des fonctionnalités nouvelles et avantageuses non disponibles avec la technologie hydraulique.

### BREVE DESCRIPTION DE L'INVENTION

On propose un procédé de commande d'un frein électromécanique pour aéronef, comportant une pile de disques et une couronne portant une pluralité d'actionneurs équipés chacun d'un poussoir déplaçable en regard de la pile de disques sous l'action d'un moteur électrique associé de sorte qu'une rotation du moteur dans un premier sens provoque l'application du poussoir contre la pile de disques, le procédé comportant selon l'invention l'étape de faire tourner au moins un moteur dans un second sens opposé au premier sens afin de faire reculer le poussoir correspondant au delà d'une distance correspondant à un jeu de fonctionnement normal entre le poussoir et la pile de disques, jusqu'à une position de référence indépendente de l'épaisseur de la pile de disques qui correspond à une butée rentrée du poussoir.

Ainsi, le poussoir n'est plus, comme dans le cas des pistons des freins hydrauliques, astreint à rester en permanence à proximité des disques, mais peut s'en éloigner de façon très simple, par simple commande du moteur électrique. Le recul du poussoir ne nécessite donc plus ni outillage spécifique ni démontage, mais une simple alimentation électrique pour faire tourner le moteur de l'actionneur.

Cette fonctionnalité permet d'envisager de nouvelles applications, dont certaines sont détaillées ci-dessous.

Selon l'invention, le poussoir est reculé jusqu'à une position de référence indépendante de l'épaisseur de la pile de disques.

Ce recul permet d'effectuer un recalage de la position du poussoir par rapport à ladite position de référence. Selon l'invention, ladite position de référence correspond à une butée rentrée du poussoir.

Avantageusement, le recul du poussoir est effectué alors que l'actionneur est encore solidaire de l'aéronef.

Le recul pourra ainsi être effectué alors que le frein est encore monté sur l'aéronef, par exemple dans le cadre d'une procédure lancée de façon automatique à chaque intervention sur le frein au moyen de l'alimentation de bord de l'aéronef.

De façon alternative, le recul du poussoir pourra être effectué au moyen d'une alimentation extérieure à l'aéronef, soit parce que l'alimentation de bord de l'aéronef ne fonctionne pas, soit parce que la partie du frein qui comporte l'actionneur a été démontée de l'aéronef.

On pourra prévoir que le poussoir d'un des actionneurs presse la pile de disques tandis que le poussoir de l'un au moins des autres actionneurs est reculé jusqu'à la position de référence.

Avantageusement, les poussoirs de tous les actionneurs sont reculés jusqu'à la position de référence.

Selon un aspect avantageux de l'invention, le recul du poussoir jusqu'à la position de référence est précédé ou suivi d'un rapprochement du poussoir de la pile de disques jusqu'à la venue en contact du poussoir avec la pile de disques.

Cette disposition permet une mesure très simple de l'usure des disques.

Selon une autre variante du procédé de l'invention, l'étape de recul fait partie d'une procédure préprogrammée de test de l'actionneur concerné.

On pourra enfin prévoir que l'étape de recul est effectuée simultanément pour au moins deux actionneurs, et de préférence pour tous les actionneurs.

### BREVE DESCRIPTION DES DESSINS

L'invention sera mieux comprise à la lumière de la description qui suit en référence aux figures des dessins annexés parmi lesquelles :
- la figure 1 est une vue en coupe d'un frein électromécanique monté sur aéronef, avec une pile de disques neufs ; et
- la figure 2 est une vue analogue à la figure 1, le frein étant cette fois équipé d'une pile de disques usés.

### DESCRIPTION DETAILLEE DE L'INVENTION

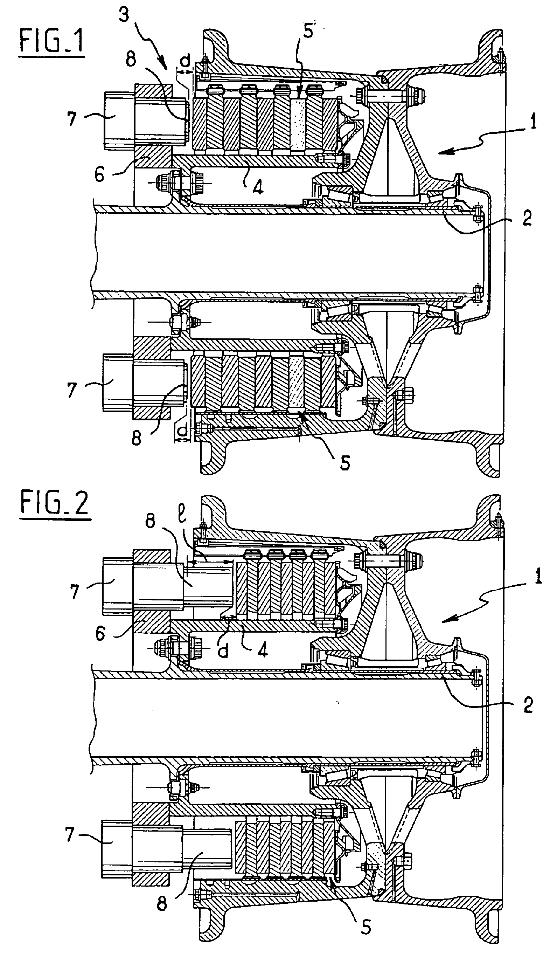

En référence à la figure 1, une roue 1 d'aéronef est montée à rotation sur un essieu 2 (le pneumatique porté par la roue n'a pas été représenté ici).

Un frein électromécanique 3 est monté sur l'essieu 2 pour permettre le freinage de la roue 1.

Le frein 3 comporte un tube de torsion 4 qui est fixé de façon détachable à l'essieu 2. Entre le tube de torsion 4 et la roue 1 s'étend une pile de disques 5 composée d'une part de disques (rotors 5) qui sont solidaires en rotation de la roue et qui tournent donc avec elle, et d'autre part de disques (stators) qui sont solidaires en rotation du tube de torsion, et qui sont donc immobiles en rotation.

Le frein 3 comporte par ailleurs une couronne 6 solidaire du tube de torsion 4, portant une pluralité d'actionneurs électromécaniques 7.

Chacun des actionneurs 7 comporte un moteur électrique (non visible sur les figures), un poussoir 8 déplaçable selon une direction parallèle à l'axe de la roue 1, et un convertisseur (non visible sur les figures) pour convertir un mouvement de rotation du moteur en un mouvement de translation du poussoir 8.

Une rotation d'un moteur dans un premier sens, tendant à faire sortir le poussoir correspondant 8, provoque donc le rapprochement du poussoir 8 de la pile de disques 5, jusqu'au contact et à l'application d'une pression sur la pile de disques 5 tendant à faire frotter entre elles les faces en regard des disques tournants et des disques immobiles. On obtient ainsi une action de freinage de la roue 1 par frottement entre les disques.

En vue d'assurer une vitesse de réaction très rapide du frein, les poussoirs 8 sont, quand le frein n'est pas actif, maintenus à proximité de la pile de disques, à une distance d correspondant à un jeu normal de fonctionnement, dans la pratique de l'ordre de quelques millimètres. Ce jeu permet la libre rotation de la roue 1, et est calculé pour éviter un contact non désiré entre les poussoirs 8 et la pile de disques à l'issue d'une action de freinage alors que les disques sont très chauds et qu'ils se dilatent, ou lorsque le tube de torsion se rétracte lors du refroidissement.

Pour ce faire, à la fin d'une action de freinage, on alimente le moteur électrique pour le faire tourner dans un second sens tendant à faire rentrer le poussoir 8. Ayant mémorisé une position de contact du poussoir concerné 8 contre la pile de disques 5, on recule le poussoir de la distance d prédéterminée, comptée à partir de ladite position de contact, pour placer le poussoir 8 dans une position d'attente (telle qu'illustrée) à proximité immédiate des disques.

On notera que la position d'attente du poussoir 8 n'est pas fixe mais dépend de l'usure des disques de la pile de disques.

En effet, au fur et à mesure de l'usure des disques, l'épaisseur totale de la pile de disques diminue, et la position d'attente du poussoir 8 correspond à une position de plus en plus sortie. A la figure 2, où une pile de disques d'usure maximale a été représentée, on constate que la position d'attente du poussoir 8 correspond à une position du poussoir bien plus sortie que celle illustrée à la figure 1, sur laquelle les disques sont encore neufs.

Selon l'invention, on alimente au moins un moteur de façon à le faire tourner dans le second sens, afin de faire reculer le poussoir jusqu'à une position de référence correspondant à une butée de rentrée du poussoir.

Le recul ainsi effectué supprime toute nécessité de recourir à un outillage spécifique comme une presse, et évite le démontage de chaque actionneur lui-même, opération délicate qui ne peut être confiée qu'à un personnel spécialisé.

Ce recul peut s'effectuer alors que le frein est encore solidaire de l'aéronef, ce qui présente plusieurs avantages. D'une part, il est possible de profiter de l'alimentation de bord de l'aéronef pour effectuer ce recul, sans qu'aucun câblage ou raccordement spécifique ne soit nécessaire. D'autre part, les poussoirs 8 sont ainsi naturellement protégés contre les coups d'outil, et aussi de la pollution par la poussière de carbone constituant les disques qui ne manque pas de se dégager à l'occasion de la manipulation du frein lors de sa maintenance.

Le recul du poussoir fait avantageusement partie d'une procédure automatique qui est déclenchée avant chaque intervention sur le frein, soit à l'initiative du pilote de l'aéronef, soit à l'initiative d'un opérateur de maintenance.

En variante, ce recul peut s'effectuer alors que la partie du frein supportant les actionneurs (en l'occurrence ici la couronne 6) n'est plus solidaire de l'aéronef. C'est le cas lorsque le frein 3 est désolidarisé de l'aéronef et ramené en atelier pour maintenance.

Dans ce cas, plusieurs possibilités sont offertes selon l'invention : on peut tout d'abord faire reculer les poussoirs 8 alors que la couronne 6 est encore solidaire du tube de torsion 4. On peut également faire reculer les poussoirs 8 alors que la couronne 6 a été désolidarisée du tube de torsion 4 (pour ces deux premières possibilités, ainsi que pour le recul des poussoirs dans le cas mentionné plus haut alors que le frein est encore solidaire de l'aéronef, il est avantageux de commander simultanément le recul de tous les poussoirs). On peut encore faire reculer le poussoir d'un actionneur alors que celui-ci a été désolidarisé de la couronne 6, que celle-ci soit encore ou non solidaire du tube de torsion 4.

Quand cela s'avérera nécessaire, par exemple en atelier, on utilisera une alimentation externe à l'aéronef pour alimenter le moteur du ou des actionneurs.

Le recul du poussoir d'un actionneur au delà d'un jeu normal de fonctionnement selon l'invention peut être exploité pour fournir des fonctionnalités diverses.

Selon l'une d'elles, on utilise le recul pour permettre une vérification du bon fonctionnement d'un capteur de position du poussoir 8 d'un au moins des actionneurs 7.

Dans ce cas, le recul jusqu'à la position de référence permet de vérifier que la valeur qu'indique le capteur lorsque le poussoir est reculé jusqu'à ladite position correspond bien à la valeur attendue.

Ce recul permet également un recalage dudit capteur de position, en réinitialisant celui-ci à une valeur déterminée lorsque le poussoir est dans ladite position de référence.

Ce recalage pourra faire partie d'une procédure automatique de test du frein effectuée de façon ponctuelle ou systématiquement avant chaque actionnement du frein.

Selon une autre fonctionnalité, on effectue un recul d'au moins deux actionneurs jusqu'à la position de référence, et on vérifie que les valeurs indiquées par les capteurs de position des actionneurs sont cohérentes entre elles.

Selon une autre fonctionnalité offerte par le recul du poussoir selon l'invention, on effectue une évaluation de l'usure des disques. Pour ce faire, on fait précéder ou suivre le recul du poussoir jusqu'à une position de référence d'un rapprochement du poussoir vers la pile de disques, jusqu'au contact dudit poussoir avec cette dernière.

En lisant la valeur du capteur de position quand le poussoir est dans la position de référence et quand le poussoir est au contact de la pile de disques, on obtient par différence une valeur représentative de l'usure des disques.

Le recul du poussoir selon l'invention permet donc de connaître précisément, et à tout instant, le degré d'usure des disques, et ainsi de déclencher une action de maintenance en vue du remplacement de la pile de disques lorsque qu'un degré d'usure critique a été atteint. Cette estimation de l'usure pourra faire également partie d'une procédure automatique de test du frein effectuée de façon ponctuelle ou systématiquement avant chaque actionnement du frein.

Selon un mode particulier de mise en oeuvre, l'un des actionneurs est employé à presser la pile de disques tandis qu'au moins un autre actionneur est employé à mesurer l'usure selon la méthode décrite ci-dessus.

La pression des disques permet de garantir que les disques sont tous en appui l'un sur l'autre, sans jeu entre les disques qui risquerait de fausser la mesure de l'usure.

L'invention n'est pas limitée aux modalités particulières de l'invention qui viennent d'être décrites, mais bien au contraire englobe toute variante entrant dans le cadre de l'invention tel que défini par les revendications.

En particulier, le procédé peut s'appliquer à un frein électromécanique comportant des actionneurs qui sont montés non pas sur une couronne solidaire du frein, mais directement sur la structure de l'aéronef. C'est le cas par exemple lorsque la couronne 6 est prévue solidaire non pas du tube de torsion 4, mais de l'essieu 2.

## Revendications

1. Procédé de commande d'un frein électromécanique pour aéronef, comportant une pile de disques (5) et une couronne (6) portant une pluralité d'actionneurs électromécaniques (7) équipés chacun d'un poussoir (8) déplaçable en regard de la pile de disques sous l'action d'un moteur électrique associé de sorte qu'une rotation du moteur dans un premier sens provoque l'application du poussoir (8) contre la pile de disques (5), **caractérisé en ce qu**'il comporte l'étape de faire tourner au moins un moteur dans un second sens opposé au premier sens afin de faire reculer le poussoir correspondant (8) au delà d'une distance (d) correspondant à un jeu de fonctionnement normal entre le poussoir (8) et la pile de disques (5), le poussoir (8) étant reculé jusqu'à une position de référence indépendante de l'épaisseur de la pile de disques qui correspond à une butée rentrée du poussoir.

2. Procédé selon la revendication 1, **caractérisé en ce que** le recul du poussoir (8) est effectué alors que l'actionneur (7) est encore solidaire de l'aéronef.

3. Procédé selon la revendication 1, **caractérisé en ce que**, pour effectuer le recul du poussoir (8), le moteur de l'actionneur (7) est alimenté par une source d'énergie extérieure à l'aéronef.

4. Procédé selon la revendication 1 **caractérisé en ce que** le recul du poussoir (8) jusqu'à la position de référence est précédé ou suivi d'un rapprochement jusqu'à la venue en contact du poussoir (8) avec la pile de disques (5).

5. Procédé selon la revendication 1, **caractérisé en ce que** le poussoir d'un des actionneurs (7) presse la pile de disques (5) tandis que le poussoir (8) de l'un au moins des autres actionneurs (7) est reculé jusqu'à la position de référence.

6. Procédé selon la revendication 1, **caractérisé en ce que** les poussoirs (8) de tous les actionneurs (7) sont reculés jusqu'à la position de référence.

7. Procédé selon la revendication 1, **caractérisé en ce que** l'étape de recul du poussoir fait partie d'une procédure préprogrammée de test de l'actionneur concerné (7).

8. Procédé selon la revendication 1, **caractérisé en ce que** l'étape de recul est effectuée simultanément pour au moins deux actionneurs (7), et de préférence pour tous les actionneurs.

## Claims

1. A method of controlling an electromechanical aircraft brake comprising a stack of disks (5) and a ring (6) carrying a plurality of electromechanical actuators (7) each fitted with a pusher (8) that is movable in register with the stack of disks under drive from an associated electric motor so that rotation of the motor in a first direction causes the pusher (8) to be pressed against the stack of disks (5), the method being **characterized in that** it comprises the step of causing at least one motor to rotate in a second direction opposite to the first direction so as to cause the corresponding pusher (8) to reverse beyond a distance (d) corresponding to normal operating clearance between the pusher (8) and the stack of disks (5), said pusher (8) being reversed to a reference position that is independent of the thickness of the stack of disks (5) which corresponds to a retraction abutment of the pusher.

2. A method according to claim 1 **characterized in that** the pusher (8) is reversed while the actuator (7) is still secured to the aircraft.

3. A method according to claim 1, **characterized in that** in order to reverse the pusher (8), the motor of the actuator (7) is powered from a power supply external to the aircraft.

4. A method according to claim 1, **characterized in that** reversal of the pusher (8) to the reference position is preceded or followed by advancing the pusher (8) until it comes into contact with the stack of disks (5).

5. A method according to claim 1, **characterized in that** the pusher of one of the actuators (7) is pressed against the stack of disk (5) while the pusher (8) of at least one other one of the actuators (7) is reversed to the reference position;

6. A method according to claim 1, **characterized in that** the pushers (8) of all of the actuators (7) are reversed to the reference position.

7. A method according to claim 1, **characterized in that** the step of reversing the pusher forms part of a preprogrammed procedure for testing the actuator (7) in question.

8. A method according to claim 1, **characterized in that** the reversal step is performed simultaneously on at least two actuators (7), and preferably on all of the actuators.

## Patentansprüche

1. Verfahren zum Steuern einer elektromechanischen Bremse für ein Flugzeug, umfassend einen Stapel von Scheiben (5) und einen Kranz (6), der eine Vielzahl von elektromechanischen Aktuatoren (7) trägt, die jeweils mit einem Stößel (8) ausgestattet sind, der relativ zum Scheibenstapel unter der Wirkung eines dazugehörigen Elektromotors derart verschiebbar ist, dass eine Drehung des Motors in eine erste Richtung die Anlage des Stößels (8) an dem Stapel von Scheiben (5) bewirkt, **dadurch gekennzeichnet, dass** es den Schritt des Drehens mindestens eines Motors in eine zur ersten Richtung entgegengesetzte zweite Richtung umfasst, um den entsprechenden Stößel (8) um mehr als einen Abstand (d) zurückzuziehen, der einem normalen Betriebsspiel zwischen dem Stößel (8) und dem Stapel von Scheiben (5) entspricht, wobei der Stößel (8) bis in eine Referenzposition zurückgezogen wird, die unabhängig von der Dicke des Scheibenstapels ist und einem Rückzugsanschlag für den Stößel entspricht.

2. Verfahren nach Anspruch 1, **dadurch gekennzeichnet, dass** das Zurückziehen des Stößels (8) bewirkt wird, während der Aktuator (7) noch fest mit dem Flugzeug verbunden ist.

3. Verfahren nach Anspruch 1, **dadurch gekennzeichnet, dass** zum Bewirken des Zurückziehens des Stößels (8) der Motor des Aktuators (7) von einer Energiequelle außerhalb des Flugzeugs gespeist wird.

4. Verfahren nach Anspruch 1, **dadurch gekennzeichnet, dass** dem Zurückziehen des Stößels (8) bis in die Referenzposition ein Annähern bis hin zum Kontaktieren des Stapels von Scheiben (5) durch den Stößel (5) vorausgeht oder folgt.

5. Verfahren nach Anspruch 1, **dadurch gekennzeichnet, dass** der Stößel eines der Aktuatoren (7) auf den Stapel von Scheiben (5) drückt, während der Stößel (8) mindestens ,eines der anderen Aktuatoren (7) bis in die Referenzposition zurückgezogen wird.

6. Verfahren nach Anspruch 1, **dadurch gekennzeichnet, dass** die Stößel (8) aller Aktuatoren (7) bis in die Referenzposition zurückgezogen werden.

7. Verfahren nach Anspruch 1, **dadurch gekennzeichnet, dass** der Schritt des Zurückziehens des Stößels Teil eines vorprogrammierten Testverfahrens zum Testen des betreffenden Aktuators (7) ist.

8. Verfahren nach Anspruch 1, **dadurch gekennzeichnet, dass** der Schritt des Zurückziehens gleichzeitig für mindestens zwei Aktuatoren (7) erfolgt, und vorzugsweise für alle Aktuatoren.
